# EUROPÄISCHE PATENTSCHRIFT

(11) **EP 1 055 947 B1**
(45) Veröffentlichungstag und Bekanntmachung des Hinweises auf die Patenterteilung: **22.12.2010**
(21) Anmeldenummer: 00107639.7
(22) Anmeldetag: 08.04.2000
(51) Int. Cl.: G02B 7/16

(54) **Wechselsystem für optische Komponenten**
Change-over system for optical components
Système pour changer des composants optiques

(30) Priorität: 28.05.1999 DE 19924686
(43) Veröffentlichungstag der Anmeldung: 29.11.2000
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Schwab, Klaus, 89520 Heidenheim (DE); Aschenbach, Ralph, 34369 Hofgeismar (DE)

(56) Entgegenhaltungen:
- WO-A-94/07173
- DE-A- 2 316 386
- DE-A- 3 627 182
- US-A- 5 128 808

## Beschreibung

Die Erfindung betrifft ein Wechselsystem für optische Komponenten wie Filter, Reflektoren, Polarisatoren oder Linsensysteme bei optischen Geräten, insbesondere Mikroskopen. Derartige Wechselsysteme werden eingesetzt, um unterschiedliche Beleuchtungs- und/oder Kontrastierungsverfahren oder unterschiedliche Nachvergrößerungen beispielsweise in der Mikroskopie zu ermöglichen. Solche Wechselsysteme weisen üblicherweise entweder einen senkrecht zu den Strahlengängen des optischen Gerätes verschiebbaren Schieber oder einen drehbar am Mikroskopstativ aufgenommenen Revolver auf, an dem dann die unterschiedliche optische Komponenten tragenden Bauteile auswechselbar aufgenommen sind. Durch Schalten des Schiebers oder des Revolvers können dann wahlweise verschiedene Bausteine, die mit unterschiedlichen Linsenkombinationen, Reflektoren oder Filtern bestückt sind, in den Strahlengang gebracht werden.

Bei den bisher bekannten Wechselsystemen sind die mit verschiedenen optischen Komponenten bestückten Bauteile entweder über Passtifte und Schrauben oder, wie in der DE 23 16 386 beschrieben, über festklemmbare Schwalbenschwanzführungen an dem Schieber oder Revolver aufgenommen. Diese Art der Aufnahme führt zu einer konstuktiv aufwendigen Gestaltung sowohl des Wechselsystems, d.h. des Schiebers oder Revolvers, als auch der Reflektor- oder Filterbausteine. Außerdem ist das Bestücken des Wechselsystems relativ zeitaufwendig und es wird ein Werkzeug benötigt.

Aus der WO94/07173-A1 ist ein Objektivrevolver für Mikroskope bekannt, in dem Gleitlager mit Anlageflächen vorgesehen sind. Aufnahmeringe für die Objektive werden mittels einer Blattfeder gegen die Anlageflächen gedrückt. Mittels Justierschrauben können die Aufnahmeringe entlang der Gleitlager verschoben werden um dadurch die optische Achse des Objektivs relativ zur optischen Achse des Mikroskops zu justieren.

Aus der US 5,128,808-A1 ist ein Kondensorrevolver für Mikroskope bekannt, der mit unterschiedlichen Kondensorkomponenten bestückt werden kann. Am Kondensorrevolver sind Blattfedern vorgesehen, die in V-förmige Nuten in den Fassungen der Kondensorkomponenten eingreifen. Auch bei diesem System sind Justierschrauben vorgesehen, mittels der die aufgenommene Kondensorkomponente gegen die Federkraft der Blattfedern relativ zum Kondensorrevolver justiert werden kann.

Das Ziel der vorliegenden Erfindung ist ein Wechselsystem für optische Komponenten bei optischen Geräten, bei dem das Bestücken mit bzw. das Auswechseln von Bauteilen, die mit den optischen Komponenten bestückt sind, vereinfacht ist. Die Erfindung soll insbesondere als Reflektor- und/oder Filterwechsler einsetzbar sein.

Dieses Ziel wird erfindungsgemäß durch ein Wechselsystem mit den Merkmalen des Anspruches 1 gelöst. Vorteilhafte Ausgestaltungen der Erfindung ergeben sich aus den Merkmalen der abhängigen Ansprüche.

Gemäß der vorliegenden Erfindung werden die mit verschiedenen optischen Komponenten wie Reflektoren, Filter, Polarisatoren oder Vergrößerungssystemen bestückten Bauteile durch Federkraft gegen präzise Anschläge des Wechselsystems gehalten. Es hat sich überraschender Weise herausgestellt, daß durch relativ einfaches Anfedern der Bauteile eine auch den Anforderungen bei Hochleistungsmikroskopen genügende Reproduzierbarkeit erreichbar ist und diese Reproduzierbarkeit auch bei der mechanischen Bewegung des Wechselsystems aufrechterhalten wird.

Für das Erzeugen der Federkraft können einfache Blattfedern vorgesehen sein.

Die mit den optischen Komponenten bestückten Bauteile, nachfolgend allgemein unabhängig von ihrer Bestückung auch als Reflektorböcke bezeichnet, weisen vorzugsweise jeweils zwei Flansche auf, die durch die Federn gegen zwei parallele Winkel am Wechselsystem gedrückt werden. Die Winkel am Wechselsystem können dabei jeweils von zwei zueinander senkrecht stehenden Flächen gebildet werden. Jedem Flansch sind dabei vorzugsweise zwei Blattfedern zugeordnet, deren Kraftrichtungen in einem Winkel ungleich 90° zueinander stehen. Die Kraftrichtung der stärkeren Feder sollte dabei in Richtung der Diagonalen des zugeordneten Flansches wirken, so daß durch diese stärkere Feder der Flansch in den Winkel des Wechselsystems gedrückt wird. Die schwächere Feder drückt dann den Flansch gegen eine der beiden dem Flansch zugeordneten Flächen des Wechselsystems.

Das erfindungsgemäße Wechselsystem kann insbesondere als drehbarer Revolver ausgebildet sein. Die Anschläge des Wechselsystems sind dann vorzugsweise an Säulen vorgesehen, die sich parallel zur Drehrichtung des Revolvers erstrecken. Die Säulen können dabei jeweils zwischen den Lichtdurchtrittsöffnungen benachbarter Schaltstellungen des Revolvers vorgesehen sein, so daß jede Säule die Anschläge für zwei benachbarte Aufnahmepositionen für Reflektorböcke aufweist. Die Säulen sind dabei vorzugsweise im peripheren Bereich des Revolvers vorgesehen, d.h. der Abstand der Säulen von der Drehachse des Revolvers ist größer als der Abstand der Mittelpunkte der Lichtdurchtrittsöffnungen des Wechselsystems von der Drehachse des Revolvers. Dadurch läßt sich eine optimal dichte Anordnung der Aufnahmepositionen für die Reflektorböcke auf dem Revolver erreichen, wodurch sich wiederum ein Optimum an Schaltstellungen des Revolvers bei vorgegebenem Revolverdurchmesser und vorgegebenem Platzbedarf für jeden Reflektorbock ergibt.

Nachfolgend werden Einzelheiten der Erfindung anhand des in den Figuren dargestellten Ausführungsbeispiels näher erläutert. Im einzelnen zeigen:
- Figur 1:: Eine perspektivische Ansicht eines Wechselsystems nach der Erfindung.
- Figur 2:: Einen Teil des Wechselsystems in Figur 1 im Schnitt.
- Figuren 3a und 3b:: Die Ansicht eines Ausführungsbeispiels für einen Reflektorbock aus zwei zueinander senkrechten Richtungen.

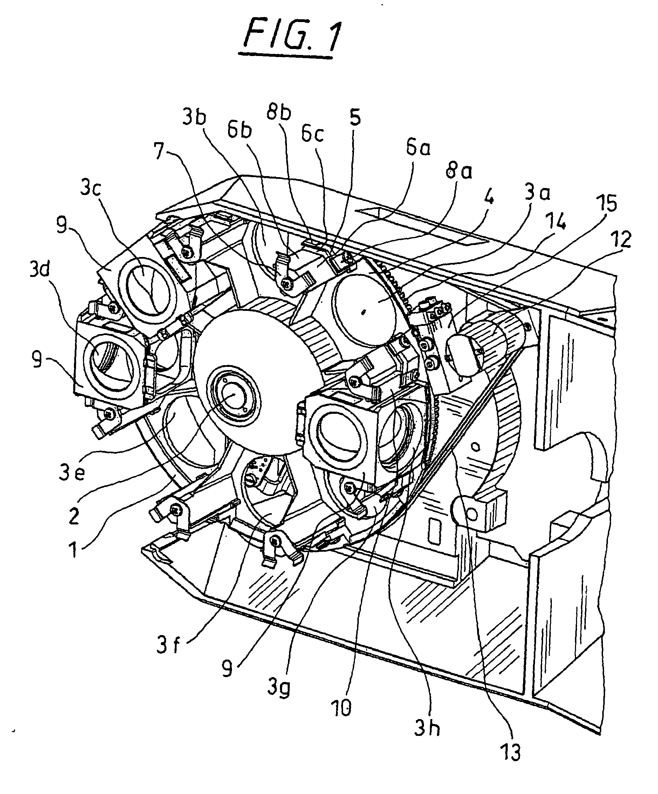

Das Wechselsystem (1) in Figur 1 weist eine Revolverscheibe (4) auf, die um ihre Mittelachse (2) drehbar ist. An ihrem peripheren Rand weist die Revolverscheibe (4) eine Zahnung (14) auf, in die die Zähne eines von einem Motor (12) angetriebenen Zahnriemens (13) eingreifen. Weiterhin weist das Wechselsystem eine Rastung (15) auf, durch die sichergestellt wird, daß nach jeder Drehung der Revolverscheibe (4) die Drehbewegung in einer definierten Schaltstellung gestoppt wird.

Weiterhin weist die Revolverscheibe (4) insgesamt 8 mit ihren Mittelpunkten auf einem Kreis um die Drehachse (2) der Revolverscheibe (4) angeordnete Lichtdurchtrittsöffnungen (3a - 3h) auf, die jeweils eine Schaltstellung des Revolvers definieren. In der in Figur 1 dargestellten Situation sind dabei die Aufnahmepositionen für Reflektorböcke zu fünf Schaltstellungen (3a, 3b, 3e, 3f und 3g) unbestückt, während die Aufnahmepositionen für Reflektorböcke zu drei Schaltstellungen (3c, 3d und 3h) mit Reflektorböcken (9) bestückt sind. Die Reflektorböcke sind dabei im wesentlichen würfelförmig ausgebildet und weisen drei Lichtdurchtrittsöffnungen auf, von denen zwei koaxial zu einander sind und eine senkrecht zu den beiden anderen steht.

Jeweils zwischen zwei Lichtdurchtrittsöffnungen der Revolverscheibe (4) ist eine Säule (5) vorgesehen. Jede dieser Säulen ist identisch aufgebaut. Die Säulen (5) unterscheiden sich lediglich in ihrer jeweils dem Drehwinkel zwischen zwei Schaltstellungen des Revolvers entsprechenden verdrehten Anordnung auf der Revolverscheibe (4).

Jede der Säulen (5) weist zwei radial nach außen und damit parallel zur Drehachse (2) des Revolvers gerichtete Flächen (6a, 6b) auf. Der Winkel zwischen diesen beiden Flächen (6a, 6b) entspricht dabei dem Drehwinkel der Revolverscheibe (4) zwischen zwei Schaltstellungen. Die der einen Lichtdurchtrittsöffnung (3a) der Revolverscheibe (4) benachbarte Fläche (6a) der Säule (5) dient dabei als Anlagefläche für einen in der durch diese Lichtdurchtrittsöffnung (3a) definierten Aufnahmeposition aufzunehmenden Reflektorbock. Die der benachbarten Lichtdurchtrittsöffnung (3b) benachbarte Fläche (6b) der Säule (5) dient entsprechend als Anlagefläche für einen in der durch die benachbarte Lichtdurchtrittsöffnung (3b) definierten Aufnahmeposition aufzunehmenden Reflektorbock. Die Abstände der radial nach außen gerichteten Anlageflächen (6a, 6b) von der Drehachse (2) des Revolvers sind dabei größer als der Abstand der Mittelpunkte der Lichtdurchtrittsöffnungen (3a - 3h) von der Drehachse des Revolvers.

Jede der Säulen (5) weist zwei weitere Anlageflächen (6c) auf, die senkrecht zu den beiden radial nach außen gerichteten Anlageflächen (6a, 6b) der Säule (5) stehen. Die jeweils einer Aufnahmeposition für Reflektorböcke zugeordneten Anlageflächen (6a, 6c) bilden dementsprechend einen Innenwinkel von 90°.

Jeweils zwei auf entgegengesetzten Seiten jeder Lichtdurchtrittsöffnung angeordnete Säulen weisen zueinander parallele Anlageflächen auf, so daß ein in der durch die Lichtdurchtrittsöffnung definierten Aufnahmeposition aufgenommener Reflektorbock mit zwei Flanschen (10) gegen parallel zueinander ausgerichtete Anlageflächen an zwei Säulen (5) anliegt.

An der Säule (5) sind zwei erste Blattfedern (8a, 8b) aufgenommen, deren Kraftrichtungen senkrecht zu den jeweiligen radial nach außen gerichteten Anlageflächen (6a, 6b) gerichtet sind. Am Säulenende ist weiterhin eine V-förmig ausgebildete Doppelblattfeder (7) aufgenommen. Die Oberflächenform beider Schenkel der V-förmigen Doppelblattfeder (7) ist selbst auch wieder V-förmig so ausgebildet, daß ein an den Anlageflächen (6a, 6c) aufzunehmender Flansch (10) eines Reflektorbockes (9) diagonal in den durch jeweils zwei zueinander senkrecht stehende Anlageflächen (6a, 6c) gebildeten Innenwinkel gedrückt wird, also ein Außenwinkel des Flansches (10) in den durch zwei senkrecht stehende Anlageflächen (6a, 6c) gebildeten Innenwinkel gedrückt wird.

Anstelle einer einzigen Doppelbattfeder (7) können selbstverständlich auch zwei einzelne Blattfedern vorgesehen sein, die jede so ausgebildet ist wie jeder der beiden Schenkel der Doppelblattfeder. Der Einsatz von zwei einzelnen Blattfedern erweist sich insbesondere bei Revolvern mit einer geringeren Anzahl an Schaltpositionen und bei Schiebern als Wechselsystem als vorteilhaft.

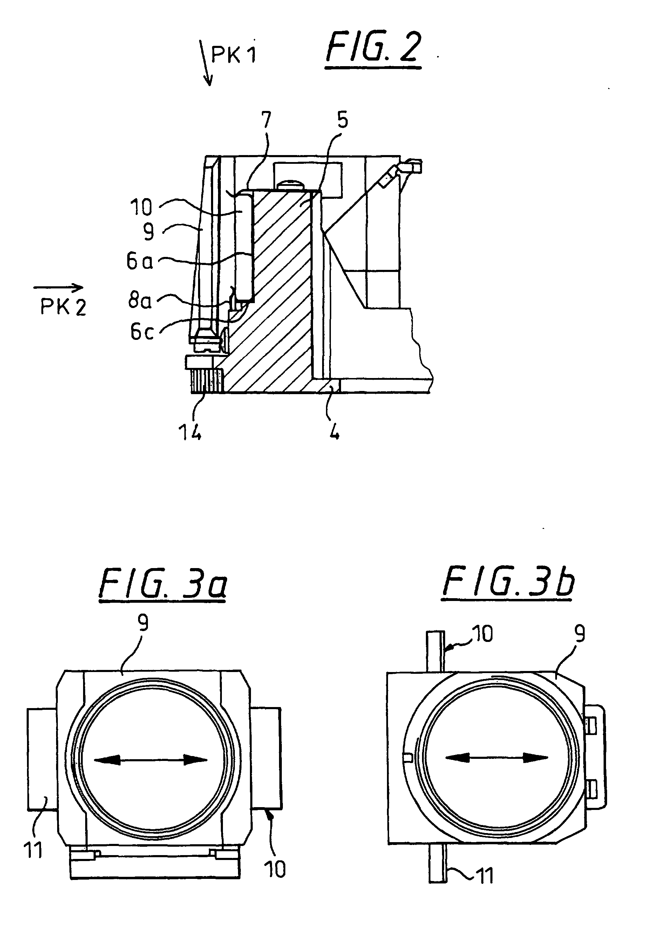

Die am Wechselsystem aufzunehmenden Reflektorböcke sind in den Figuren 3a und 3b dargestellt. Sie bestehen im wesentlichen aus zwei Gehäusehälften, die gemeinsam einen würfelförmigen Hohlkörper (9) mit drei kreisförmigen Öffnungen für den Lichtdurchtritt bilden. Jede der beiden Gehäusehälften entspricht einem halben, entlang einer Flächendiagonalen geschnittenen Würfel. Im inneren des Hohlkörpers sind die optischen Komponenten angeordnet, für den Einsatz als Reflektor beispielsweise ein sich parallel zur Winkelhalbierenden erstreckender Spiegel oder, im Falle eines Filters, sich parallel zu den Würfelflächen erstreckende Filtergläser. Für den Einsatz als Vergrößerungswechsler sind Linsengruppen, die gemeinsam ein Teleskop bilden, parallel zu den Lichtdurchtrittsöffnungen vorgesehen. Seitlich außerhalb des würfelförmigen Hohlkörpers sind aufeinander gegenüberliegenden Seiten des Hohlkörpers zwei Flansche (10, 11) vorgesehen. Die eine Gehäusehälfte der Reflektorböcke (9), die die Flansche (10, 11) aufweist, kann im Druckgußverfahren hergestellt sein, wobei lediglich die zur Aufnahme der Reflektorböcke dienenden Flächen der Flansche (10, 11) und die Aufnahmen und/oder Anlageflächen für die optischen Komponenten präzise nachgearbeitet sind. Die zweite Gehäusehälfte ist ein Kunststoffteil, das eine relativ geringe Präzision aufweist und lediglich zum Halten von Filtern oder zum Andrücken von Reflektoren gegen Anlageflächen des anderen Gehäuseteils dient.

Die Flansche (10, 11) sind symmetrisch zu den Mittelpunkten der Lichtdurchtrittsöffnungen ausgebildet und entsprechend symmetrisch an dem betreffenden Gehäuseteil angeordnet, so daß die Reflektorböcke je nach Anwendungsfall in zwei um 180° verdrehten Stellungen mit gleicher Präzision im Revolver aufgenommen werden können.

Das Bestücken des Wechselsystems mit Reflektorböcken läßt sich am einfachsten anhand der Figur 2 erläutern. Der aufzunehmende Reflektorbock (9) wird zunächst mit jeweils einer Kante jeder der beiden Flansche (10, 11) hinter die der Revolverscheibe (4) benachbarten Blattfedern (8a) an den der Aufhabmeposition zugeordneten beiden Säulen gesteckt. Der Reflektorbock (9) wird dabei um etwa 10° um eine zur Zeichenebene in Figur 2 senkrecht stehende Achse gegenüber der endgültigen Aufnahmeposition verdreht gehalten. Um das Einfügen der Kanten der Flansche (10, 11) zu erleichtern, ist das freie Ende der Blattfedern (8a) von der Anlagefläche (6a) der Säulen (5) weggebogen. Das Einfügen der Flansche (10, 11) erfolgt demzufolge gegen die Federkraft der Blattfedern (8a). Die Blattfedern (8a) drücken in Richtung des Pfeiles PK 2 gegen die Flansche (10, 11) und drücken diese gegen die nach außen gerichteten Anlageflächen (6a) der Säulen (5) auf entgegengesetzten Seiten der Lichtdurchtrittsöffnung.

Nachfolgend erfolgt eine Drehung des Reflektorbockes um eine senkrecht zur Zeichenebene in Figur 2 stehende Achse. Dabei werden zunächst die an ihrem freien Ende V-förmig ausgebildeten zweiten Blattfedern (7) zweier Säulen (5) gegen ihre Federkraft ausgelenkt. Bei weiterer Drehung des Reflektorbockes (9) gleiten die Spitzen der V der Blattfedern (7) über die Kanten der Flansche (10, 11) und drücken die Flansche (10, 11) gegen die kurzen, senkrecht zur Drehachse des Revolvers stehenden Anlageflächen (6c) beider Säulen. In der in Figur 2 dargestellten Endstellung liegen die Anlageflächen der Flansche (10, 11) an den Anlageflächen (6a, 6c) der Säulen (5) an. Die Form und Länge der Blattfedern (7) ist dabei in Abhängigkeit von den Abmessungen der Flansche (10, 11) so gewählt, daß in der Endstellung der Flansche (10, 11) die von den Blattfedern (7) auf die Flansche ausgeübten Kräfte jeweils in Richtung der durch die beiden senkrecht zueinander stehenden Anlageflächen (6a, 6c) gebildeten Innenkanten wirken. Diese Kraftrichtung ist in der Figur 2 durch den Pfeil PK1 angedeutet. Durch die entsprechende Ausbildung der Federn (7, 8a) und der Kraftrichtungen der Federn wird sichergestellt, daß die Flansche (10, 11) auch bei Auftreten von Schwingungen, wie diese bei einer Schaltung des Revolvers unvermeidlich sind, stets in der selben reproduzierbaren Stellung an den Anlageflächen (6a, 6c) der Säulen (5) anliegen. Bei entsprechend präziser Ausbildung der Anlageflächen (6a, 6c) und der entsprechenden Gegenflächen der Flansche (10, 11) der Reflektorböcke ist beim Wechsel bzw. Ein- und Ausbau der Reflektorböcke eine reproduzierbare Genauigkeit von ± 0,01mm erreicht. Die Winkelgenauigkeit der Aufnahme liegt innerhalb einer Bogenminute. Um diese Genauigkeit zu erreichen, kann auch die Revolverscheibe (4) einschließlich der Säulen (5) ein Druckgußteil sein, wobei lediglich die Anlageflächen (6a, 6b, 6c) der Säulen (5) präzise nachzuarbeiten sind.

Die erfindungsgemäße Federklemmung der Reflektorböcke am Wechselsystem ermöglicht eine schnelle und einfache Bestückung des Wechselsystems mit Reflektorböcken bzw. ein auswechseln der Reflektorböcke. Werkzeuge sind dabei nicht erforderlich.

## Patentansprüche

1. Wechselsystem für optische Komponenten bei optischen Geräten, insbesondere Mikroskopen, mit mehreren jeweils verschiedene optische Komponenten tragenden Bauteilen (9), wobei das Wechselsystem für jedes aufzunehmende Bauteile (9) zueinander senkrechte Anschläge (6a, 6c) aufweist, die Bauteile (9) Flansche (10, 11) aufweisen, **dadurch gekennzeichnet daß** die Flansche durch Federkraft in den von den zwei zueinander senkrecht stehenden Flächen (6a, 6c) gebildeten Winkel am Wechselsystem gedrückt werden.

2. Wechselsystem nach Anspruch 1, wobei für die Erzeugung der Federkraft Blattfedern (7, 8a, 8b) vorgesehen sind.

3. Wechselsystem nach Anspruch 1 oder 2, wobei jedem Flansch (10, 11) zwei Blattfedern (7, 8a) zugeordnet sind, deren Kraftrichtungen ungleich 90° geneigt zueinander stehen.

4. Wechselsystem nach Anspruch 2 oder 3, wobei die Flansche (10, 11) seitlich der Bauteile (9) angeordnet sind und die Abmessungen der Bauteile (9) seitlich überragen.

5. Wechselsystem nach einem der Ansprüche 1 - 4, wobei das Wechselsystem als drehbarer Revolver ausgebildet ist.

6. Wechselsystem nach Anspruch 5, wobei die Anschläge an sich parallel zur Drehachse (2) des Revolvers erstreckenden Säulen (5) ausgebildet sind.

7. Wechselsystem nach Anspruch 6, wobei die Säulen (5) zwischen den Lichtdurchtrittsöffnungen (3a - 3h) jeweils benachbarter Schaltstellungen des Revolvers angeordnet sind.

8. Wechselsystem nach Anspruch 7, wobei jeweils zwei benachbarte Säulen (5) parallele Anschläge aufweisen.

9. Wechselsystem nach Anspruch 7 oder 8, wobei der Abstand der Säulen (5) von der Drehachse (2) des Revolvers größer als der Abstand der Mittelpunkte der Lichtdurchtrittsöffnungen (3a - 3h) von der Drehachse (2) des Revolvers ist.

10. Wechselsystem nach einem der Ansprüche 1 - 9, wobei ein motorischer Antrieb (12, 13, 14) für die Schaltung des Wechselsystems vorgesehen ist.

11. Wechselsystem nach einem der Ansprüche 1 - 10, wobei die optischen Komponenten Reflektoren, Filter, Polarisatoren oder teleskopische Linsensysteme sind.

12. Wechselsystem nach einem der Ansprüche 3 - 11, wobei die Flansche (10, 11) symmetrisch zu Lichtdurchtrittsöffnungen angeordnet sind, so daß die Bauteile in zwei um 180° verdrehten Stellungen am Wechselsystem (1) aufnehmbar sind.

13. Wechselsystem nach einem der Ansprüche 3 - 12, wobei die Bauteile (9) aus zwei Gehäusehälften bestehen und die Flansche (10, 11) an einer Gehäusehälfte angeordnet sind.

14. Wechselsystem nach einem der Ansprüche 3 - 13 wobei eine der Blattfedern (7) V-förmig ausgebildet ist und so bemessen ist, daß bei aufgenommenen Bauteil (9) eine Kante des Flansches (10, 11) an der dem freien Ende der Blattfeder abgewandten Flanke des V anliegt.

## Claims

1. Change-over system for optical components in optical devices, particularly microscopes, having a plurality of modules (9) respectively supporting various optical components, the change-over system having stops (6a, 6c) at right angles to one another for each module (9) to be held, and the modules (9) having flanges (10, 11), **characterized in that** the flanges are pressed against the change-over system by spring force at the angle formed by the two surfaces (6a, 6c) at right angles to one another.

2. Change-over system according to Claim 1, in which leaf springs (7, 8a, 8b) are provided for producing the spring force.

3. Change-over system according to Claim 1 or 2, in which each flange (10, 11) is assigned two leaf springs (7, 8a) whose force directions are inclined to one another at an angle other than 90°.

4. Change-over system according to Claim 2 or 3, in which the flanges (10, 11) are arranged to the side of the modules (9) and laterally overlap the dimensions of the modules (9).

5. Change-over system according to one of Claims 1-4, in which the change-over system is designed as a rotatable revolver.

6. Change-over system according to Claim 5, in which the stops are formed on columns (5) extending parallel to the rotational axis (2) of the revolver.

7. Change-over system according to Claim 6, in which the columns (5) are arranged between the light exit openings (3a-3h) of respectively adjacent switch positions of the revolver.

8. Change-over system according to Claim 7, in which two adjacent columns (5) respectively have parallel stops.

9. Change-over system according to Claim 7 or 8, in which the distance of the columns (5) from the rotation axis (2) of the revolver is greater than the distance of the centres of the light exit openings (3a-3h) from the rotational axis (2) of the revolver.

10. Change-over system according to one of Claims 1-9, in which a motor drive (12, 13, 14) is provided for switching the change-over system.

11. Change-over system according to one of Claims 1-10, in which the optical components are reflectors, filters, polarizers or telescopic lens systems.

12. Change-over system according to one of Claims 3-11, in which the flanges (10, 11) are arranged symmetrically in relation to light exit openings such that the modules can be held on the change-over system (1) in two positions rotated by 180°.

13. Change-over system according to one of Claims 3-12, in which the modules (9) are composed of the two housing halves, and the flanges (10, 11) are arranged on one housing half.

14. Change-over system according to one of Claims 3-13, in which one of the leaf springs (7) is designed in V-shaped fashion and is dimensioned such that, when a module (9) is held, one edge of the flange (10, 11) bears against that flank of the V which is averted from the free end of the leaf spring.

## Revendications

1. Système de changement pour composants optiques sur des appareils optiques, notamment des microscopes, comprenant plusieurs éléments constitutifs (9) supportant à chaque fois différents composants optiques, le système de changement présentant pour chaque élément constitutif (9) à accueillir des butées (6a, 6c) perpendiculaires l'une à l'autre, les éléments constitutifs (9) présentant des brides (10, 11), **caractérisé en ce que** les brides sont comprimées par une force de ressort dans l'angle formé par les deux surfaces (6a, 6c) perpendiculaires l'une à l'autre sur le système de changement.

2. Système de changement selon la revendication 1, des ressorts à lame (7, 8a, 8b) étant prévus pour générer la force de ressort.

3. Système de changement selon la revendication 1 ou 2, deux ressorts à lame (7, 8a) étant associés à chaque bride (10, 11), dont les directions des forces sont inclinées l'une par rapport à l'autre selon un angle différent de 90°.

4. Système de changement selon la revendication 2 ou 3, les brides (10, 11) étant disposées sur le côté des éléments constitutifs (9) et faisant saillie latéralement des dimensions des éléments constitutifs (9).

5. Système de changement selon l'une des revendications 1 à 4, le système de changement étant réalisé sous la forme d'un revolver rotatif.

6. Système de changement selon la revendication 5, les butées étant formées sur des colonnes (5) qui s'étendent parallèlement à l'axe de rotation (2) du revolver.

7. Système de changement selon la revendication 6, les colonnes (5) étant disposées entre les ouvertures de passage de la lumière (3a - 3h) de positions de commutation respectivement voisines du revolver.

8. Système de changement selon la revendication 7, deux colonnes (5) voisines présentant à chaque fois des butées parallèles.

9. Système de changement selon la revendication 7 ou 8, l'écart entre les colonnes (5) et l'axe de rotation (2) du revolver étant supérieur à l'écart entre les points centraux des ouvertures de passage de la lumière (3a - 3h) et l'axe de rotation (2) du revolver.

10. Système de changement selon l'une des revendications 1 à 9, un mécanisme d'entraînement motorisé (12, 13, 14) étant prévu pour la commutation du système de changement.

11. Système de changement selon l'une des revendications 1 à 10, les composants optiques étant des réflecteurs, des filtres, des polarisateurs ou des systèmes de lentilles télescopiques.

12. Système de changement selon l'une des revendications 3 à 11, les brides (10, 11) étant disposées de manière symétrique par rapport aux ouvertures de passage de la lumière de sorte que les éléments constitutifs puissent être accueillis sur le système de changement (1) dans deux positions pivotées de 180°.

13. Système de changement selon l'une des revendications 3 à 12, les éléments constitutifs (9) se composant de deux moitiés de boîtier et les brides (10, 11) étant disposées sur une moitié de boîtier.

14. Système de changement selon l'une des revendications 3 à 13, l'un des ressorts à lame (7) étant réalisé en forme de V et étant dimensionné de telle sorte que lorsqu'il accueille l'élément constitutif (9), une arête de la bride (10, 11) repose sur l'arête du V qui est à l'opposé de l'extrémité libre du ressort à lame.
